# EUROPEAN PATENT APPLICATION

(11) **EP 4 628 300 A1**
(43) Date of publication of application: **08.10.2025**
(21) Application number: 23897457.0
(22) Date of filing: 13.11.2023
(51) Int. Cl.: B32B 27/20, B05D 1/36, B05D 5/06, B05D 7/24, B32B 7/023, C09D 5/29, C09D 7/61, C09D 175/04

(54) **COATED PRODUCT AND METHOD FOR MANUFACTURING SAME**

(30) Priority: 30.11.2022 JP 2022192243
(71) Applicant: MAZDA MOTOR CORPORATION, Hiroshima 730-8670 (JP); Nippon Paint Automotive Coatings Co., Ltd., Hirakata-shi, Osaka 573-1153 (JP)
(72) Inventor: YAMANE, Takakazu, Aki-gun, Hiroshima 730-8670 (JP); OKAMOTO, Keiichi, Aki-gun, Hiroshima 730-8670 (JP); TERAMOTO, Kouji, Aki-gun, Hiroshima 730-8670 (JP); NONAKA, Ryuji, Aki-gun, Hiroshima 730-8670 (JP); TAMAI, Kazuteru, Aki-gun, Hiroshima 730-8670 (JP); KAWASE, Eiichi, Aki-gun, Hiroshima 730-8670 (JP); TSUNEOKA, Tatsuo, Aki-gun, Hiroshima 730-8670 (JP); MATSUDA, Takaomi, Aki-gun, Hiroshima 730-8670 (JP); FUJIMOTO, Tomohiro, Aki-gun, Hiroshima 730-8670 (JP); MIMURA, Natsumi, Aki-gun, Hiroshima 730-8670 (JP); NAKAMOTO, Takayoshi, Aki-gun, Hiroshima 730-8670 (JP); HAMADA, Yuko, Aki-gun, Hiroshima 730-8670 (JP); SHIGEMATSU, Yuki, Hirakata-shi, Osaka 573-1153 (JP); MARUO, Kenji, Hirakata-shi, Osaka 573-1153 (JP); TSUJIHARA, Kazuki, Hirakata-shi, Osaka 573-1153 (JP)
(74) Representative: Mewburn Ellis LLP
(86) International application number: PCT/JP2023/040759
(87) International publication number: WO 2024/116805

(57) **Abstract**

Provided are a coated article having superior sense of color depth and a method for producing the same. A coated article including an article to be coated and a multilayer coating film, wherein the multilayer coating film includes: a glitter coating film including a glitter pigment; a colored coating film including a coloring pigment; and a clear coating film, a ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less, and a ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less.

## Description

### TECHNICAL FIELD

The present invention relates to a coated article and a method for producing the same.

### BACKGROUND ART

In the field of industrial products such as automobile painting, various colors and design properties dependent on the preference of users are required. One example of such a design is a multilayer coating film in which a color clear coating film including a coloring pigment is laminated on a coating film including a glitter pigment and/or a coloring pigment (Patent Document 1).

### PRIOR ART DOCUMENT

### PATENT DOCUMENT

Patent Document 1: JP-A-2014 042891

### SUMMARY OF THE INVENTION

### PROBLEMS TO BE SOLVED BY THE INVENTION

Since in such a multilayer coating film, the color and/or the reflected light of the lower coating film can be visually recognized through the color clear coating film provided as the upper layer, color depth is sensed.

A challenge of the present invention is to provide a coated article having further superior sense of color depth and a method for producing the same.

### SOLUTIONS TO THE PROBLEMS

In order to solve the above-described problems, the present invention provides the following embodiments.
[1] A coated article comprising an article to be coated and a multilayer coating film, wherein
   the multilayer coating film includes:
      a glitter coating film that is formed on the article to be coated and includes a glitter pigment;
      a colored coating film that is formed on the glitter coating film and includes a coloring pigment; and
      a clear coating film that is formed on the colored coating film,
   a ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less, and
   a ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less.
[2] The coated article according to [1], wherein
   a ratio (GL*₁₅/GL*₁₁₀) of a lightness GL*₁₅ based on a spectral reflectance attained when light GI₄₅ applied at an angle of 45 degrees with respect to a surface of the glitter coating film is received at an angle of 15 degrees with respect to regularly-reflected light to a lightness GL*₁₁₀ based on a spectral reflectance attained when the light GI₄₅ is received at an angle of 110 degrees with respect to regularly-reflected light is 15 or more and 25 or less, and
   a ratio (GC*₁₅/GC*₁₁₀) of a chroma GC*₁₅ in the L*C*h color system based on a spectral reflectance attained when the light GI₄₅ is received at an angle of 15 degrees with respect to regularly-reflected light to a chroma GC*₁₁₀ in the L*C*h color system based on a spectral reflectance attained when the light GI₄₅ is received at an angle of 110 degrees with respect to regularly-reflected light is 15 or more and 35 or less.
[3] The coated article according to [1] or [2], wherein the glitter coating film has a thickness of 3 µm or more and 7 µm or less.
[4] The coated article according to any one of [1] to [3], wherein the glitter pigment includes scaly aluminum particles.
[5] The coated article according to [4], wherein the scaly aluminum particles have an average particle size of 8 µm or more and 13 µm or less and a thickness of 0.08 µm or more and 0.2 µm or less.
[6] The coated article of any one of [1] to [5], wherein the glitter pigment includes vapor-deposited chromium oxide.
[7] A method for producing a coated article, comprising:
   a step of applying a glitter pigment dispersion including a glitter pigment to an article to be coated to form an uncured glitter coating film;
   a step of applying a colored coating material including a coloring pigment to the uncured glitter coating film to form an uncured colored coating film;
   a step of applying a clear coating material to the uncured colored coating film to form an uncured clear coating film; and
   a step of curing the uncured glitter coating film, the uncured colored coating film, and the uncured clear coating film to obtain a multilayer coating film, wherein
   a ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less, and
   a ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less.
[8] The method for producing a coated article according to [7], wherein a solid content of the glitter pigment dispersion is 16% by mass or more and 20% by mass or less.
[9] The method for producing a coated article according to [7] or [8], wherein the clear coating material is a two-pack coating material including a hydroxy group-containing resin and a polyisocyanate compound.

### EFFECTS OF THE INVENTION

According to the present invention, it is possible to provide a coated article having excellent sense of color depth and a method for producing the same.

### BRIEF DESCRIPTION OF THE DRAWINGS

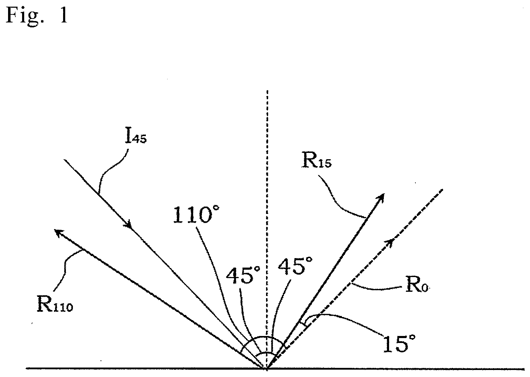

[Fig. 1] Fig. 1 is a diagram for explaining a light-receiving angle.

### DETAILED DESCRIPTION

### [Coated article]

The "depth" of color can be rephrased as, for example, "deepness" or "sterecoscopicity" of color. When the brightness (lightness) of the color and the vividness (chroma) of the color greatly vary depending on the viewing angle, some deepness or stereoscopicity of the color can be felt, and the color can be felt as a deep color.

The lightness and the chroma represent different color properties (attributes). Generally, the higher the lightness is, the lower the chroma is. That is, the change rate of the lightness and the change rate of the chroma are contradictory.

The coated article of the present disclosure simultaneously achieves both a large lightness change rate and a large chroma change rate. The coated article of the present disclosure includes an article to be coated and a multilayer coating film, and the multilayer coating film includes a glitter coating film formed on the article to be coated and including a glitter pigment, a colored coating film formed on the glitter coating film and including a coloring pigment, and a clear coating film formed on the colored coating film. The ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less. Further, the ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less. As a result, superior sense of color depth can be obtained.

### (Lightness L*₁₅, L*₁₁₀)

In the present disclosure, the rate of change in lightness of the multilayer coating film is represented by the ratio of lightness L*₁₅ to lightness L*₁₁₀ (L*₁₅/L*₁₁₀). In the present disclosure, the L*₁₅/L*₁₁₀ of the multilayer coating film is 5 or more and 9 or less. The fact that L*₁₅/L*₁₁₀ is in this range means that the lightness L greatly varies depending on the viewing angle.

The lightness L*₁₅ is a lightness L* in the L*C*h color system calculated from the spectral reflectance attained when light I₄₅ incident on the multilayer coating film from the clear coating film side at an incidence angle of 45° is received at an angle of 15° with respect to the regularly-reflected light. Similarly, the lightness L*₁₁₀ is the lightness L* in the L*C*h color system calculated from the spectral reflectance attained when light I₄₅ incident on the multilayer coating film from the clear coating film side at an incidence angle of 45° is received at an angle of 110° with respect to the regularly-reflected light.

In the L*C*h color system, L* represents lightness, C* represents chroma, and h represents a hue angle. As the numerical value of the lightness L* increases, the brightness of the analyte increases, and as the numerical value decreases, the darkness increases.

L*₁₅/L*₁₁₀ may be 5.5 or more, 6 or more, or 6.5 or more. L*₁₅/L*₁₁₀ may be 8.5 or less, 8 or less, or 7.5 or less.

The L*C*h color system is calculated on the basis of the CIE L*a*b color system (the CIE 1976 L*a*b* color space). The CIE 1976L*a*b* color space can be determined in accordance with JIS Z 8781-4. The CIE L*a*b color system is defined by the International Commission on Illumination and is described in Section 4.2 of CIE Publication 15.2 (1986). The lightness L*₁₅ and the lightness L*₁₁₀ can be acquired using, for example, a multi-angle colorimeter (for example, BYK-mac i manufactured by BYK-Gardner).

The light-receiving angle of 15° is a so-called highlight condition, and the lightness L* tends to be higher than that under the shade and face conditions. It can be said that the lightness L*₁₅ represents lightness under a condition where brightness is more easily felt. The lightness L*₁₅ may be 10 or more, or 15 or more in that the rate of change in lightness tends to be large. From the same viewpoint, the lightness L*₁₅ may be 30 or less, or 25 or less.

It can be said that the light-receiving angle of 110° is a so-called shade condition, and the lightness L*₁₁₀ represents lightness under a condition in which brightness is less likely to be felt. From the same viewpoint, the lightness L*₁₁₀ may be 0 or more, or 2 or more. From the same viewpoint, the lightness L*₁₁₀ may be 6 or less, or 4 or less.

### (Chroma C*₁₅, C*₁₁₀)

In the present disclosure, the rate of change in chroma of a multilayer coating film is represented by the ratio of the chroma C*₁₅ to the chroma C*₁₁₀ (C*₁₅/C*₁₁₀). In the present disclosure, C*₁₅/C*₁₁₀ of the multilayer coating film is 8 or more and 12 or less. The fact that C*₁₅/C*₁₁₀ is in this range means that the chroma C greatly varies depending on the viewing angle.

The chroma C*₁₅ is a chroma C* in the L*C*h color system calculated from the spectral reflectance attained when light I₄₅ incident on the multilayer coating film from the clear coating film side at an incident angle of 45° is received at an angle of 15° with respect to the regularly-reflected light. Similarly, the chroma C*₁₁₀ is a chroma C* in the L*C*h color system calculated from the spectral reflectance attained light I₄₅ incident on the multilayer coating film from the clear coating film side at an incident angle of 45° is received at an angle of 110° with respect to the regularly-reflected light.

In the L*C*h color system, as the chroma C* increases, the vividness increases, whereas as the chroma C* decreases, the dullness increases.

C*₁₅/C*₁₁₀ may be 8.5 or more, or 9 or more. C*₁₅/C*₁₁₀ may be 11 or less, or 10 or less.

The chroma C*₁₅ may be 35 or more, or 40 or more in that the rate of change in chroma tends to be large. The chroma C*₁₅ may be 55 or less, or 50 or less from the same viewpoint.

The chroma C*₁₁₀ may be 1 or more, or 3 or more from the same viewpoint. The chroma C*₁₁₀ may be 9 or less, or 7 or less from the same viewpoint.

Fig. 1 is a diagram for explaining a light-receiving angle. The regularly-reflected light of light I₄₅ applied from an angle of 45 degrees with respect to the surface of the multilayer coating film is indicated by R₀. The light received at an angle of 15 degrees with respect to the regularly-reflected light of the light I₄₅ is indicated by R₁₅. From the spectral reflectance of the light R₁₅, the lightness L*₁₅ and the chroma C*₁₅ are calculated. The light received at an angle of 110 degrees with respect to the regularly-reflected light of the light I₄₅ is indicated by R₁₁₀. From the spectral reflectance of the light R₁₁₀, the lightness L*₁₁₀ and the chroma C*₁₁₀ are calculated.

### (Graininess Si₁₅)

To enhance the sense of color depth, it is desirable that diffuse reflection of light by the multilayer coating film is small. For example, when light incident on the multilayer coating film at an incident angle of 15° is imaged from the normal direction of the multilayer coating film a value is determined by analyzing the captured image by a specific image analysis algorithm (hereinafter, this value determined is referred to as graininess Si₁₅) is 4 or less, the sense of color depth is further enhanced. A histogram of brightness levels is used for the above image analysis algorithm.

The graininess Si₁₅ can be acquired using a multi-angle colorimeter (for example, BYK-mac i manufactured by BYK-Gardner). The Si₁₅ value is an average value of graininess Si₁₅ of five different samples.

The graininess Si₁₅ may be 3.6 or less, or 3.3 or less. The graininess Si₁₅ may be 2.4 or more, or 2.7 or more.

### (Article to be coated)

Examples of the article to be coated include at least a part of the body of a vehicle, such as a passenger car, a truck, or a bus. Examples of the material of the article to be coated include a metal including iron, copper, aluminum, tin, zinc, or an alloy thereof. The article to be coated may have a plate shape or a three-dimensional shape. The coated article according to the present disclosure constitutes at least a part of an automobile.

The article to be coated may be subjected to degreasing treatment and/or surface treatment. Examples of the surface treatment include phosphate salt treatment, chromate treatment, zirconium chemical conversion treatment, and composite oxide treatment. The metal material may have undercoating with an electrodeposition coating material provided after the surface treatment. The electrodeposition coating material may be of a cationic type or of an anionic type.

### (Glitter coating film)

The glitter coating film includes a glitter pigment. The glitter coating film hides the texture and the color of the article to be coated and imparts a metallic texture to the multilayer coating film. The rates of changes in the lightness and the chroma of the glitter coating film affect the rates of changes in the lightness and the chroma of the multilayer coating film. The glitter coating film is formed of a glitter pigment dispersion (X). The glitter pigment dispersion (X) will be described later.

### <Lightness GL*₁₅, GL*₁₁₀>

The rate of change in the lightness of the glitter coating film can be represented by the ratio of the lightness GL*₁₅ to the lightness GL*₁₁₀ (GL*₁₅/GL*₁₁₀).

The lightness GL*₁₅ is a lightness L* in the L*C*h color system calculated from the spectral reflectance attained when light GI₄₅ incident on the glitter coating film at an incident angle of 45° is received at an angle of 15° with respect to the regularly-reflected light. Similarly, the lightness GL*₁₁₀ is a lightness L* in the L*C*h color system calculated from the spectral reflectance attained when light GI₄₅ incident on the glitter coating film at an incident angle of 45° is received at an angle of 110° with respect to the regularly-reflected light. The lightness GL* is measured using a coated plate in which only a glitter coating film after curing is disposed on an article to be coated.

The ratio of the lightness GL*₁₅ to the lightness GL*₁₁₀ (GL*₁₅/GL*₁₁₀) of the glitter coating film is, for example, 15 or more and 25 or less. When GL*₁₅/GL*₁₁₀ is in this range, the rate of change in the lightness of the multilayer coating film tends to be larger.

GL*₁₅/GL*₁₁₀ may be 17 or more, or 18 or more. GL*₁₅/GL*₁₁₀ may be 24 or less, or 23 or less.

The lightness GL*₁₅ may be 35 or more, or 40 or more in that the rate of change in lightness tends to be large. The lightness GL*₁₅ may be 55 or less, or 50 or less from the same viewpoint.

The lightness GL*₁₁₀ may be 1 or more, or 2 or more from the same viewpoint. The lightness GL*₁₁₀ may be 11 or less, or 9 or less from the same viewpoint.

### <Chroma GC*₁₅, GC*₁₁₀>

The rate of change in the chroma of the glitter coating film can be expressed by the ratio of the chroma GC*₁₅ to the chroma GC*₁₁₀ (C*₁₅/C*₁₁₀).

The chroma GC*₁₅ is a chroma C* in the L*C*h color system calculated from the spectral reflectance attained when light GI₄₅ incident on the glitter coating film at an incident angle of 45° is received at an angle of 15° with respect to the regularly-reflected light. Similarly, the chroma GC*₁₁₀ is a chroma C* in the L*C*h color system calculated from the spectral reflectance attained light GI₄₅ incident on the glitter coating film at an incident angle of 45° is received at an angle of 110° with respect to the regularly-reflected light. The chroma GC* is measured using a coated plate in which only a glitter coating film after curing is disposed on an article to be coated.

GC*₁₅/GC*₁₁₀ is, for example, 15 or more and 35 or less. When GC*₁₅/GC*₁₁₀ is in this range, the rate of change in the chroma of the multilayer coating film tends to be larger.

GC*₁₅/GC*₁₁₀ may be 18 or more, 20 or more, or 22 or more. GC*₁₅/GC*₁₁₀ may be 32 or less, 30 or less, or 27 or less.

The chroma GC*₁₅ may be 15 or more, or 20 or more in that the rate of change in chroma tends to be large. The chroma GC*₁₅ may be 35 or less, or 30 or less from the same viewpoint.

The chroma GC*₁₁₀ may be 0 or more, or 0.5 or more from the same viewpoint. The chroma GC*₁₁₀ may be 2 or less, or 1.5 or less from the same viewpoint.

In particular, the glitter coating film may have a ratio of the lightness GL*₁₅ to the lightness GL*₁₁₀ (GL*₁₅/GL*₁₁₀) of 15 or more and 25 or less, and a ratio of the chroma GC*₁₅ to the chroma GC*₁₁₀ (GC*₁₅/GC*₁₁₀) of 5 or more and 35 or less.

### <Hiding property>

The sense of color depth can be improved as the hiding property of the glitter coating film is higher. This is because the influence of the color of the base (the article to be coated) is reduced.

The hiding property of the glitter coating film is evaluated by, for example, the monochrome hiding film thickness. The monochrome hiding film thickness is measured using a hiding power test paper in accordance with JIS K 5600-4-1 (b). The glitter pigment dispersion is spray-applied onto a 2 × 2 cm square monochrome checkered pattern of the hiding power measuring paper such that a gradient of dry film thickness is formed, and then is heated and cured. Next, a coating film portion where the monochrome checkered pattern cannot be seen through is visually determined, and the film thickness of the portion is measured. The measured film thickness is the monochrome hiding film thickness. It can be said that the smaller the monochrome hiding film thickness is, the stronger the hiding property is.

The monochrome hiding film thickness of the glitter coating film may be 9 µm or less, 7 µm or less, or 6 µm or less. In this case, it can be said that the glitter coating film has a high hiding property.

### <Light transmittance>

The light transmittance is desirably low. An electrodeposition coating film usually formed on a metallic article to be coated has low light resistance. When the light transmittance of the glitter coating film is low, the amount of light reaching the electrodeposition coating film can be reduced, and degradation of the electrodeposition coating film is suppressed. As a result, peeling of the glitter coating film at the interface with the electrodeposition coating film is suppressed.

The transmittance of rays of light having a wavelength of 400 to 700 nm of the glitter coating film may be 0.25% or less, 0.15% or less, or 0.10% or less. In this case, it can be said that the glitter coating film has a low light transmittance. The light transmittance may be 0.15% or less at any wavelength of 400 to 700 nm.

The light transmittance of the glitter coating film is measured every 10 nm by irradiating a film formed of the glitter pigment dispersion (a single body of a glitter coating film after curing) with rays of light having a wavelength of 400 to 700 nm using a spectrophotometer (U-3310 manufactured by Hitachi, Ltd.).

### <Glitter pigment>

The glitter pigment is not particularly limited as long as it reflects light.

Examples of the glitter pigment include metal particles. Examples of the metal particles specifically include particles of aluminum, copper, zinc, iron, nickel, tin, aluminum oxide, chromium oxide, and alloys containing these. These are used singly or two or more of them are used in combination. The glitter pigment may be colored.

The glitter pigment may be a scaly glitter pigment and may be scaly metal particles in that diffuse reflection is likely to be suppressed. The aspect ratio of the scaly glitter pigment is, for example, 2 or more. The aspect ratio is a ratio of a major axis of one principal plane of the scaly glitter pigment to a distance (thickness) between two principal planes of the scaly glitter pigment (major axis/thickness). The aspect ratio of the scaly glitter pigment may be 10 or more and 1000 or less.

The glitter coating film may include, together with the scaly glitter pigment, a glitter pigment other than the scaly glitter pigment (a glitter pigment having an aspect ratio of less than 2). It is noted that the content of the other glitter pigment may be 10% by mass or less, or 5% by mass or less of all the glitter pigments.

The glitter pigment may be scaly aluminum particles in that a high sparkle texture can be obtained with a small amount, and also may be scaly chromium oxide (vapor-deposited chromium oxide) obtained by forming a film by a vapor deposition method and then pulverizing the film.

Scaly aluminum particles and vapor-deposited chromium oxide may be used in combination. In this case, the blending ratio may be scaly aluminum particles/vapor-deposited chromium oxide = 99/1 to 90/10 on a mass basis.

The average particle size of the scaly aluminum particles may be 8 µm or more and 13 µm or less in that a sparkle texture is easily improved. The average particle size of the scaly aluminum particles may be 8.2 µm or more, or 8.5 µm or more. The average particle size of the scaly aluminum particles may be 12.8 µm or less, or 12.5 µm or less.

The average particle size means a volume average particle size D50. The volume average particle size D50 is a 50% average particle size (D50) in a volume-based particle size distribution determined using a laser diffraction/scattering type particle size distribution analyzer (for example, "Microtrac UPA 150" manufactured by Nikkiso Co., Ltd.).

The thickness of the scaly aluminum particles may be 0.08 µm or more and 0.2 µm or less. As a result, the glitter coating film can be thinned, and the sparkle texture can be further improved. The thickness of the scaly aluminum particles may be 0.09 µm or more, or 0.1 µm or more. The thickness of the scaly aluminum particles may be 0.19 µm or less, or 0.18 µm or less.

The thickness of the scaly glitter pigment may be calculated by observing a section in the thickness direction of the multilayer coating film with an electron microscope. In the observation field, a region corresponding to the glitter pigment and the other region are binarized by image processing software. Next, 20 glitter pigments are arbitrarily selected, and the lengths of their thickest parts are each measured. The average value of these measured values is the thickness of the scaly glitter pigment.

The scaly aluminum particles may have an average particle size of 8 µm or more and 13 µm or less and a thickness of 0.08 µm or more and 0.2 µm or less.

The average particle size of the vapor-deposited chromium oxide may be 10 µm or more and 20 µm or less. The average particle size of the vapor-deposited chromium oxide may be 11.0 µm or more, or 12.0 µm or more. The average particle size of the vapor-deposited chromium oxide may be 19.0 µm or less, or 16.0 µm or less.

The thickness of the vapor-deposited chromium oxide may be 0.01 µm or more and 0.3 µm or less. The thickness of the vapor-deposited chromium oxide may be 0.012 µm or more, or 0.013 µm or more. The thickness of the vapor-deposited chromium oxide may be 0.28 µm or less, or 0.25 µm or less.

### <Thickness>

The thickness of the glitter coating film may be 3 µm or more and 7 µm or less. As a result, the orientation of the glitter pigment can be improved. The thickness of the glitter coating film may be 3.5 µm or more, or 4 µm or more. The thickness of the glitter coating film may be 6.5 µm or less, or 6 µm or less. The thickness of the glitter coating film is thickness after drying or curing.

The thickness of the coating film is measured with, for example, an electromagnetic film thickness meter. The thickness of the glitter coating film is an average value of the thicknesses of the glitter coating films in five different samples. The thicknesses of the other layers can be measured and calculated in the same way.

### (Colored coating film)

The colored coating film includes a coloring pigment. The colored coating film imparts a desired color to the coated article. The colored coating film is formed of a colored coating material (Y). The colored coating material (Y) will be described later.

### <Coloring pigment>

Examples of the coloring pigment include organic coloring pigments such as azo chelate pigments, insoluble azo pigments, condensed azo pigments, diketopyrrolopyrrole-based pigments, benzimidazolone-based pigments, phthalocyanine-based pigments, indigo pigments, perinone-based pigments, perylene-based pigments, dioxane-based pigments, quinacridone-based pigments, isoindolinone-based pigments, and metal complex pigments; and inorganic coloring pigments such as chrome yellow, yellow iron oxide, red iron oxide, carbon black, and titanium dioxide. These are used singly or two or more of them are used in combination.

The primary particle size of the coloring pigment may be 10 nm or more and 300 nm or less from the viewpoint of hiding property. The primary particle size of the coloring pigment may be 30 nm or more. The primary particle size of the coloring pigment may be 100 nm or less. The primary particle size can be measured from an electron microscope image of a section of the multilayer coating film using image processing software.

### <Thickness>

The thickness of the colored coating film is, for example, 4 µm or more and 20 µm or less. The thickness of the colored coating film may be 6 µm or more, or 8 µm or more. The thickness of the colored coating film may be 17 µm or less, or 15 µm or less.

### (Clear coating film)

The clear coating film protects the glitter coating film and the colored coating film. The clear coating film is not particularly limited, and has the same configuration as that of a conventionally known clear coating film. The clear coating film is formed of a clear coating material (Z). The clear coating material (Z) will be described later.

### <Thickness>

The thickness of the clear coating film may be 10 µm or more and 50 µm or less in that scratch resistance is improved and the sense of color depth is hardly impaired. The thickness of the clear coating film may be 15 µm or more. The thickness of the clear coating film may be 40 µm or less.

### [Method for producing coated article]

The coated article according to the present disclosure is manufactured by forming a glitter coating film, a colored coating film, and a clear coating film in this order on an article to be coated. When the colored coating film is formed, the glitter coating film may have been cured or may have been uncured. When the clear coating film is formed, the colored coating film may have been cured or may be uncured. In particular, it is preferable in that the sense of color depth can be further improved that the respective coating films are laminated without being cured, and then heated to simultaneously cure the three uncured coating films. According to this method, productivity, adhesiveness, and water resistance can also be improved.

The coated article according to the present disclosure is manufactured by, for example, a method including: a step of applying a glitter pigment dispersion (X) onto an article to be coated to form an uncured glitter coating film; a step of applying a colored coating material onto the uncured glitter coating film to form an uncured colored coating film; a step of applying a clear coating material onto the uncured colored coating film to form an uncured clear coating film; and a step of curing the uncured colored coating film, the uncured glitter coating film, and the uncured clear coating film to obtain a multilayer coating film.

The formed multilayer coating film has a ratio L*₁₅/L*₁₁₀ of 5 or more and 9 or less and a ratio C*₁₅/C*₁₁₀ of 8 or more and 12 or less.

### (1) Step of forming uncured glitter coating film

The glitter pigment dispersion (X) is applied onto an article to be coated to form an uncured glitter coating film.

Examples of the applying method include air spray coating, airless spray coating, rotary atomization coating, and curtain coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "micro micro bell (µµ bell)", "micro bell (µ bell)", "metallic bell", or the like is used.

The glitter pigment dispersion (X) is applied, for example, such that the thickness of the glitter coating film in the resulting multilayer coating film is 3 µm or more and 7 µm or less.

After the glitter pigment dispersion (X) is applied, preliminary drying may be performed. As a result, the fluidity of the glitter coating film rapidly decreases, and the flow of the glitter pigment is easily suppressed. Further, the preliminary drying inhibits the mixing of the uncured glitter coating film and the colored coating material (Y) to be applied thereto, so that a mixed layer is hardly formed. Therefore, the appearance of a resulting multilayer coating film can be improved.

Examples of the preliminary drying include a method in which the item to be dried is left standing for 15 minutes or more and 30 minutes or less under a temperature condition of 20°C or more and 25°C or less, and a method in which the item to be dried is heated for 30 seconds or more and 10 minutes or less under a temperature condition of 50°C or more and 100°C or less.

### (Glitter pigment dispersion (X))

The glitter coating film is formed of a glitter pigment dispersion (X). The glitter pigment dispersion (X) may be either aqueous or solvent-based. The term "aqueous" means that the proportion of water in all the solvent is 50% by mass or more. The term "solvent-based" means that the proportion of an organic solvent in all the solvent is 50% by mass or more.

The glitter pigment dispersion (X) includes the above-described glitter pigment. The glitter pigment dispersion (X) includes a resin component, a solvent, and so on, as necessary. The glitter pigment dispersion (X) is prepared by diluting a mixture of the glitter pigment, a resin component, additives, and the like with a solvent.

The viscosity of the glitter pigment dispersion (X) measured by a B-type viscometer at 20°C may be, for example, 3000 cps/6 rpm or more and 15000 cps/6 rpm or less.

The solid content of the glitter pigment dispersion (X) affects the discharge amount of the coating composition at the time of application. When the discharge amount varies, the size of droplets of the coating composition also varies, which affects the orientation of the glitter pigment. The solid content of the glitter pigment dispersion (X) may be 16% by mass or more and 20% by mass or less in that it is easy to adjust GL*₁₅/GL*₁₁₀ to 15 or more and 25 or less and GC*₁₅/GC*₁₁₀ to 15 or more and 35 or less. As a result, in particular, GL*₁₅/GL*₁₁₀ is easily adjusted to 15 or more and 25 or less. The solid content of the glitter pigment dispersion (X) may be 16.5% by mass or more, or 17% by mass or more. The solid content of the glitter pigment dispersion (X) may be 19.5% by mass or less, or 19% by mass or less. The solid of the glitter pigment dispersion (X) is all components obtained by removing the solvent from the glitter pigment dispersion (X).

The pigment mass concentration (PWC) of the glitter pigment may be 5.0% by mass or more and 25.0% by mass or less. The PWC of the glitter pigment may be 7.0% by mass or more, or 10.0% by mass or more. The PWC of the glitter pigment may be 23.0% by mass or less, 20.0% by mass or less, or 15.0% by mass or less.

The pigment mass concentration (PWC) is a mass ratio of the target pigment (in the above case, the glitter pigment) to the sum of the solid mass of the resin contained in the coating material and the mass of the pigment. The solid of the resin is the solid of the resin component (see description below) contained in the coating material.

### • Resin component

The glitter pigment dispersion (X) may contain a resin component. Examples of the resin component include a thermosetting resin. As the resin component, a curing agent may further be contained.

The content of the resin component may be, for example, 30% by mass or more and 75% by mass or less of all solid of the glitter pigment dispersion (X). The content of the resin component may be 35% by mass or more, or 40% by mass or more. The content of the resin component may be 70% by mass or less, or 66% by mass or less.

The thermosetting resin is formed of, for example, a crosslinkable functional group and a base resin. Examples of the crosslinkable functional group include a carboxy group, a hydroxy group, an epoxy group, a silanol group, and a (meth)acryloyl group.

Examples of the base resin include an acrylic resin, a polyester resin, an alkyd resin, a polyurethane resin, an epoxy resin, and a fluororesin. The epoxy resin may be a urethane-modified epoxy resin. The polyester resin may be a urethane-modified polyester resin. The acrylic resin may be a urethane-modified acrylic resin. Each urethane-modified resin has a urethane linkage in the resin skeleton. These are used singly or two or more of them are used in combination. Among them, the base resin may be the acrylic resin and the urethane-modified polyester in that chipping resistance is improved.

The acrylic resin is obtained by, for example, copolymerizing an α,β-ethylenically unsaturated carboxylic acid, a (meth)acrylic acid ester having a functional group such as a hydroxy group, an amide group, or a methylol group, another (meth)acrylic acid ester, and styrene.

The urethane-modified polyester is obtained via a reaction between a hydroxy group-containing polyester and an aliphatic diisocyanate compound. The hydroxy group-containing polyester is prepared by polycondensation of an acid component such as a polyvalent carboxylic acid and/or an acid anhydride with a polyhydric alcohol. Examples of the aliphatic diisocyanate compound include hexamethylene diisocyanate, trimethylhexamethylene diisocyanate, cyclohexane-1,4-diisocyanate, dicyclohexylmethane-4,4-diisocyanate, and methylcyclohexane diisocyanate.

When water is used as the solvent, a thermosetting resin having a hydrophilic group may be used. By neutralizing the hydrophilic group of the thermosetting resin to form an alkali salt, the thermosetting resin is made water-soluble or water-dispersible. Examples of the hydrophilic group include a carboxy group, a hydroxy group, a methylol group, an amino group, a sulfonic acid group, and a polyoxyethylene linkage. Examples of the neutralizing agent include alkaline substances such as sodium hydroxide and amine compounds.

The thermosetting resin can be prepared in a state in which the thermosetting resin is dispersed in water by subjecting the starting material monomers of the thermosetting resin to emulsion polymerization in the presence of a surfactant or a water-soluble resin. Alternatively, the thermosetting resin may be dispersed in water with an emulsifier. In these cases, the thermosetting resin may not contain a hydrophilic group, or may slightly contain a hydrophilic group.

Examples of the curing agent include an amino resin, a urea resin, a polyisocyanate compound, an epoxy group-containing compound, a carboxy group-containing compound, a carbodiimide group-containing compound, a hydrazide group-containing compound, and a semicarbazide group-containing compound. The polyisocyanate compound includes a blocked polyisocyanate compound in which an isocyanate group is blocked with a blocking agent. These are used singly or two or more of them are used in combination. Among them, the curing agent may be an amino resin and/or a polyisocyanate compound from the viewpoint of various performance and cost of a resulting coating film.

The amino resin is obtained, for example, by condensing an amino compound such as melamine, benzoguanamine, or urea with formaldehyde, and further etherifying the condensate with a lower monohydric alcohol. The details of the polyisocyanate compound will be described later.

The content of the curing agent is not particularly limited. From the viewpoint of curability, the solid mass of the curing agent may be 10% by mass or more and 40% by mass or less of the total of the solid mass of the thermosetting resin and the solid mass of the curing agent. The solid mass of the curing agent may be 15% by mass or more. The solid mass of the curing agent may be 30% by mass or less, or 25% by mass or less.

The content of the thermosetting resin is not particularly limited. When a curing agent is contained, the solid mass of the thermosetting resin may be 60% by mass or more and 90% by mass or less of the total of the solid mass of the thermosetting resin and the solid mass of the curing agent. The solid mass of the thermosetting resin may be 70% by mass or more. The solid mass of the thermosetting resin may be 85% by mass or less.

### • Solvent

The solvent may be water (deionized water), an organic solvent, or a combination thereof. Among them, the solvent may be water from the viewpoint of low volatile organic compounds (VOC). That is, the glitter pigment dispersion (X) may be aqueous. In the aqueous glitter pigment dispersion (X), the proportion of water accounting for in the solvent is 50% by mass or more, and may be 80% by mass or more.

Examples of the organic solvent include ester solvents such as ethyl acetate, butyl acetate, isopropyl acetate, ethylene glycol monoethyl ether acetate, propylene glycol monomethyl ether acetate, and propylene glycol monoethyl ether acetate; ether solvents such as propylene glycol monomethyl ether, ethylene glycol monomethyl ether, methylmethoxybutanol, ethoxypropanol, ethylene glycol isopropyl ether, ethylene glycol t-butyl ether, ethylene glycol monoethyl ether, ethylene glycol monobutyl ether, methoxybutanol, and propylene glycol monobutyl ether; alcohol solvents such as methanol, ethanol, butanol, and propyl alcohol; ketone solvents such as acetone, methyl ethyl ketone, and methyl isobutyl ketone; aliphatic hydrocarbon solvents such as Swasol, ShellSol, and Mineral Spirit; and aromatic solvents such as xylene, toluene, Solvesso-100 (S-100) and Solvesso-150 (S-150). These are used singly or two or more of them are used in combination.

The solvent is added, for example, such that the solid content of the glitter pigment dispersion (X) is 16% by mass or more and 20% by mass or less.

### • Other pigments

The glitter pigment dispersion (X) may include a pigment other than the glitter pigment depending on the hiding property or the like. Examples of such other pigments include rust-proof pigments, coloring pigments, and extender pigments. Examples of the coloring pigment include those enumerated as examples of the coloring pigment to be used for the colored coating film. Examples of the extender pigment include calcium carbonate, barium sulfate, clay, and talc. These are used singly or two or more of them are used in combination.

### • Additives

The glitter pigment dispersion (X) may include various additives, as necessary. Examples of the additive include an ultraviolet absorber, an antioxidant, a defoaming agent, a viscosity modifier, an antisettling agent, a dispersant, a surface conditioning agent, and a pinhole inhibitor. These are used singly or two or more of them are used in combination.

### (2) Step of forming uncured colored coating film

The colored coating material (Y) is applied to the uncured glitter coating film to form an uncured colored coating film.

The colored coating material (Y) is applied, for example, such that the thickness of the colored coating film after curing is 5 µm or more and 15 µm or less.

Examples of the application method include the same methods as the method of applying the glitter pigment dispersion (X). Among them, rotary atomization type electrostatic coating is preferable from the viewpoint of coating efficiency.

After the colored coating material (Y) is applied, preliminary drying (also referred to as preheating) may be carried out. As a result, the solvent contained in the colored coating film is inhibited from bumping in the curing step, so that the occurrence of bubbles is likely to be inhibited. Conditions for the preliminary drying are not particularly limited, and may be the same as those for the preliminary drying of the glitter pigment dispersion (X).

### (Colored coating material (Y))

The colored coating film is formed of a colored coating material (Y). The colored coating material (Y) may be aqueous or solvent-based. The colored coating material (Y) may be either a one-pack coating material or a multi-pack coating material such as a two-pack coating material.

The colored coating material (Y) includes the coloring pigment described above. The colored coating material (Y) includes a resin component, a solvent, and so on, as necessary. The colored coating material (Y) is prepared by diluting a mixture of the coloring pigment, a resin component, additives, and the like with a solvent.

The viscosity of the colored coating material (Y) measured with a B-type viscometer at 20°C may be, for example, 500 cps/6 rpm or more and 6000 cps/6 rpm or less.

The solid content of the colored coating material (Y) may be 10% by mass or more and 40% by mass or less. The solid of the colored coating material (Y) is all components of the colored coating material (Y) excluding the solvent.

The PWC of the coloring pigment may be, for example, 50% by mass or less and 0.1% by mass or more. The PWC of the coloring pigment may be 20% by mass or less.

### • Resin component

The colored coating material (Y) may include a resin component. Examples of the resin component include those enumerated as examples of the resin component of the glitter pigment dispersion (X) (typically, a thermosetting resin and a curing agent).

The content of the resin component may be, for example, 50% by mass or more and 95% by mass or less of all solid of the colored coating material (Y). The content of the resin component may be 60% by mass or more, or 65% by mass or more. The content of the resin component may be 90% by mass or less, or 85% by mass or less.

### • Solvent

The solvent may be water (deionized water), an organic solvent, or a combination thereof. Among them, the solvent may be water from the viewpoint of low VOC. That is, the colored coating material (Y) may be aqueous. In the aqueous colored coating material (Y), the proportion of water accounting for in the solvent is 50% by mass or more, and may be 80% by mass or more. Examples of the organic solvent include those enumerated as examples of the organic solvent of the glitter pigment dispersion (X).

### • Other pigments

The colored coating material (Y) may further include other pigments depending on the hiding property and the like. Examples of such other pigments include rust-proof pigments and the extender pigments described above. These are used singly or two or more of them are used in combination.

### • Additives

The colored coating material (Y) may include various additives, as necessary. Examples of the additive include those enumerated as examples of the additive of the glitter pigment dispersion (X).

### (3) Step of forming uncured clear coating film

A clear coating material (Z) is applied to the uncured colored coating film to form an uncured clear coating film.

Examples of the applying method include the same methods as the method of applying the colored coating material. Among them, rotary atomization type electrostatic coating is preferable from the viewpoint of coating efficiency.

The clear coating material (Z) is applied, for example, such that the thickness of the clear coating film after curing is 25 µm or more and 45 µm or less.

### (Clear coating material (Z))

The clear coating film is formed of a clear coating material (Z). The clear coating material (Z) may be a powder, an aqueous system, or a solvent-based system. The clear coating material (Z) may be either a one-pack coating material or a multi-pack coating material such as a two-pack coating material. From the viewpoint that the physical properties of the coating film are easily improved, the clear coating material (Z) may be a two-pack type.

The clear coating material (Z) includes a resin component. The clear coating material (Z) includes a solvent, as necessary. The clear coating material (Z) is prepared by diluting a mixture of a resin component, various additives, and so on with a solvent.

The viscosity of the clear coating material (Z) measured with a B-type viscometer at 20°C may be, for example, 500 cps/6 rpm or more and 6000 cps/6 rpm or less.

The solid content of the clear coating material (Z) may be, for example, 40% by mass or more and 60% by mass or less. The solid of the clear coating material (Z) is all components of the clear coating material (Z) excluding the solvent.

### • Resin component

The clear coating material (Z) includes a resin component. Examples of the resin component include those enumerated as examples of the resin component of the glitter pigment dispersion (X). The clear coating material (Z) may include a thermosetting resin and a curing agent as resin components. Such a clear coating material (Z) is a so-called two-pack coating material.

The two-pack clear coating material (Z) may include a hydroxy group-containing resin as a thermosetting resin and a polyisocyanate compound as a curing agent in that the physical properties of the coating film are easily improved.

Examples of the hydroxy group-containing resin specifically include a hydroxy group-containing acrylic resin, a hydroxy group-containing polyester resin, a hydroxy group-containing polyether resin, and a hydroxy group-containing polyurethane resin. These are used singly or two or more of them are used in combination. Among them, the hydroxy group-containing resin may be a hydroxy group-containing acrylic resin and a hydroxy group-containing polyester resin, and may be a hydroxy group-containing acrylic resin.

The hydroxyl value of the hydroxy group-containing acrylic resin may be, for example, 80 mg KOH/g or more and 200 mg KOH/g or less. As a result, the scratch resistance and the water resistance of a resulting coating film can be improved. The hydroxyl value of the hydroxy group-containing acrylic resin may be 100 mg KOH/g or more. The hydroxyl value of the hydroxy group-containing acrylic resin may be 180 mg KOH/g or less.

The weight average molecular weight of the hydroxy group-containing acrylic resin may be 2500 or more and 40000 or less. As a result, the acid resistance and the smoothness of a resulting coating film can be improved. The weight average molecular weight of the hydroxy group-containing acrylic resin may be 5000 or more. The weight average molecular weight of the hydroxy group-containing acrylic resin may be 30000 or less.

The weight average molecular weight can be calculated based on the molecular weight of standard polystyrene from a chromatogram measured with a gel permeation chromatograph. As the gel permeation chromatograph, for example, HLC8120GPC (manufactured by Tosoh Corporation) is used. As a column, TSKgel G-4000HXL, TSKgel G-3000HXL, TSKgel G-2500HXL, and TSKgel G-2000HXL (all manufactured by Tosoh Corporation) are used. The chromatography is performed, for example, using tetrahydrofuran as a mobile phase and a differential refractive index detector (RI) as a detector under the conditions of a measurement temperature of 40°C and a flow rate of 1 cc/min.

The polyisocyanate compound has at least two isocyanate groups in one molecule. Examples of the polyisocyanate compound include aliphatic polyisocyanates, alicyclic polyisocyanates, aliphatic polyisocyanates having an aromatic ring not bonded to an isocyanate group in the molecule (araliphatic polyisocyanates), aromatic polyisocyanates, and derivatives of these polyisocyanates. These are used singly or two or more of them are used in combination.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanate include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or a mixture thereof, methylenebis(4,1-cyclohexanediyl) diisocyanate (common name: hydrogenated MDI), norbornane diisocyanate, and 4,4'-methylenebis(cyclohexyl isocyanate); and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the araliphatic polyisocyanate include araliphatic diisocyanates such as methylenebis(4,1-phenylene) diisocyanate (common name: MDI), 1,3- or 1,4-xylylene diisocyanate or a mixture thereof, ω,ω'-diisocyanato-1,4-diethylbenzene, 1,3- or 1,4-bis(1-isocyanato-1-methylethyl)benzene (common name: tetramethylxylylene diisocyanate) or a mixture thereof; and araliphatic triisocyanates such as 1,3,5-triisocyanatomethylbenzene.

Examples of the aromatic polyisocyanate include aromatic diisocyanates such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or a mixture thereof, 4,4'-toluidine diisocyanate, and 4,4'-diphenyl ether diisocyanate; aromatic triisocyanates such as triphenylmethane-4,4',4"-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate.

Examples of the derivative of polyisocyanate include dimer, trimer, biuret, allophanate, uretdione, uretimine, isocyanurate, oxadiazinetrione, polymethylene polyphenyl polyisocyanate (crude MDI, polymeric MDI), and crude TDI of the polyisocyanate described above.

From the viewpoint of adhesiveness, compatibility, and the like, the polyisocyanate compound may be hexamethylene diisocyanate and 4,4'-methylenebis(cyclohexyl isocyanate), and also may be derivatives of hexamethylene diisocyanate.

As the polyisocyanate compound, a prepolymer of the polyisocyanate described above or a derivative thereof may be used. The prepolymer is obtained by reacting a polyisocyanate or a derivative thereof with a compound capable of reacting with the polyisocyanate or the derivative thereof under conditions such that isocyanate groups are present in excess. The compound capable of reacting with the polyisocyanate or the derivative thereof is a compound having an active hydrogen group such as a hydroxy group or an amino group. Examples of the compound include polyhydric alcohols, low molecular weight polyester resins, amines, and water.

As the polyisocyanate compound, a blocked polyisocyanate compound may be used. The blocked polyisocyanate compound is obtained by blocking an isocyanate group in the polyisocyanate or a derivative thereof with a blocking agent.

Examples of the blocking agent include a phenol compound, a lactam compound, an alcohol, an ether, an oxime compound, a compound having an active methylene group, a mercaptan compound, an acid amide compound, an imide compound, an amine compound, an imidazole compound, a urea compound, a carbamic acid ester, an imine compound, a sulfite salt, an azole compound, and a ketone compound.

The equivalent ratio (= OH/NCO) of the hydroxy group of the hydroxy group-containing resin to the isocyanate group of the polyisocyanate compound may be 0.5 or more and 2.0 or less from the viewpoint of the curability, scratch resistance, and the like of the coating film. The equivalent ratio (= OH/NCO) may be 0.8 or more. The equivalent ratio (= OH/NCO) may be 1.5 or less.

### • Solvent

The solvent may be water (deionized water), an organic solvent, or a combination thereof. Among them, the solvent may be water from the viewpoint of low VOC. That is, the clear coating material (Z) may be aqueous. In the aqueous clear coating material (Z), the proportion of water accounting for in the solvent is 50% by mass or more, and may be 80% by mass or more. Examples of the organic solvent include those enumerated as examples of the organic solvent of the glitter pigment dispersion (X).

### • Pigment

The clear coating material (Z) may include a pigment as long as transparency is not impaired. Examples of the pigment include the aforementioned glitter pigments, coloring pigments, and extender pigments. These are used singly or two or more of them are used in combination. The amount of the pigment added is not particularly limited. The PWC of the pigment may be, for example, 30% by mass or less, or 10% by mass or less. The PWC of the pigment may be, for example, 0.01% by mass or more.

### • Additives

The clear coating material (Z) may include various additives, as necessary. Examples of the additive include those enumerated as examples of the additive of the glitter pigment dispersion (X).

### (4) Curing step

The uncured glitter coating film, the uncured colored coating film, and the uncured clear coating film are cured at one time. Each coating film can be cured by heating.

The heating conditions are appropriately set according to the composition and the like of the respective coating films. The heating temperature is, for example, 70°C or more and 150°C or less, and may be 80°C or more and 140°C or less. The heating time is, for example, 10 minutes or more and 40 minutes or less, and may be 20 minutes or more and 30 minutes or less. Examples of a heating device include drying furnaces such as a hot air oven, an electric oven, and an infrared induction heating oven. Examples

In the following, the present invention will be described more specifically with reference to Examples and Comparative Examples. Note that the present invention is not limited to these Examples only. Both "part" and "%" are on a mass basis.

### [Example 1]

### (I) Preparation of article to be coated

A zinc phosphate-treated steel sheet with a cured electrodeposition coating film was prepared as an article to be coated. The cured electrodeposition coating film was formed by electrodeposition coating the zinc phosphate-treated steel sheet with "POWERNICS", which is a cationic electrodeposition coating composition manufactured by Nippon Paint Co., Ltd., such that a dry film thickness was 20 µm, and then heating at 160°C for 30 minutes.

### (II)Preparation of coating material

### • Preparation of glitter pigment dispersion (X)

A glitter pigment dispersion (X) was obtained by adding deionized water to 0.86 parts of scaly aluminum (Al) particles A, 0.09 parts of scaly Al particles B, 0.03 parts of vapor-deposited chromium oxide, 13.7 parts of aluminum-dissolved thinner, 0.99 parts of carbon black pigment, 1.04 parts of perylene pigment, 0.09 parts of iron oxide pigment, 3.50 parts of a hydroxy group-containing acrylic emulsion resin, 3.50 parts of a thermosetting resin, 0.24 parts of phosphoric acid, 0.33 parts of a surface conditioning agent, 0.37 parts of an amine, and 0.03 parts of a defoaming agent such that the solid content was 18.0%, and stirring the mixture.
Scaly Al particles A: trade name "Z0684N", manufactured by Toyo Aluminium K.K., thickness: 0.15 µm, average particle size: 12 µm
Scaly Al particles B: trade name "FD-5090", manufactured by Asahi Kasei Corporation, thickness: 0.11 µm, average particle size: 9 µm
Vapor-deposited chromium oxide: trade name "METALURE Liquid Black", manufactured by Eckart Corporation, thickness: 0.015 to 0.2 µm, average particle size: 14 µm

### • Preparation of colored coating material (Y)

A colored coating material (Y) having a solid content of 23.0% was obtained by adding deionized water to 1.01 parts of perylene pigment, 0.27 parts of iron oxide pigment, 7.57 parts of a hydroxy group-containing acrylic emulsion resin, 1.71 parts of an acrylic resin, 4.81 parts of a thermosetting resin, 0.26 parts of a surface conditioning agent, 0.47 parts of an amine, and 0.01 parts of a defoaming agent such that the overall amount was 100 parts, and stirring the mixture.

### (Production of hydroxy group-containing acrylic resin emulsion)

A reaction vessel for the conventional production of an acrylic resin emulsion equipped with a stirrer, a thermometer, a dropping funnel, a reflux condenser, a nitrogen inlet tube, etc., is charged with 445 parts of water and 5 parts of Newcol 293 (manufactured by Nippon Nyukazai Co., Ltd.), which were then heated to 75°C with stirring. A mixture of a monomer mixture containing 145 parts of methyl methacrylate, 50 parts of styrene, 220 parts of ethyl acrylate, 70 parts of 2-hydroxyethyl methacrylate, and 15 parts of methacrylic acid, 240 parts of water, and 30 parts of Newcol 293 (manufactured by Nippon Nyukazai Co., Ltd.) was emulsified with a homogenizer, and thus a monomer pre-emulsion was obtained. The monomer pre-emulsion was added dropwise over 3 hours with stirring the inside of the reaction vessel. In parallel with the dropping of the monomer pre-emulsion, an aqueous solution prepared by dissolving 1 part of APS (ammonium persulfate) as a polymerization initiator in 50 parts of water was evenly dropped to the reaction vessel until the dropping of the monomer pre-emulsion was completed. After the completion of dropping the monomer pre-emulsion, the reaction was continued at 80°C for 1 hour. After cooling the reaction mixture, an aqueous solution prepared by dissolving 2 parts of dimethylaminoethanol in 20 parts of water was added to the reaction vessel, affording a hydroxy group-containing acrylic resin emulsion having a solid content of 40.6% by mass.

The solid component of the resulting hydroxy group-containing acrylic resin emulsion had an acid value of 20 mg KOH/g, a hydroxyl value of 60 mg KOH/g, and a glass transition temperature (Tg) of 30°C. The solid content was measured in accordance with JIS K 5601-1-2 Method for Measuring Non-Volatile Matter Content.

### • Preparation of clear coating material (Z)

PU Excel 0-3100-6 (two-pack clear coating material, containing hydroxy group-containing resin and polyisocyanate compound, manufactured by Nippon Paint Co., Ltd.) was prepared as a clear coating material (Z).

### (III) Step of forming uncured glitter coating film

The glitter pigment dispersion (X) was applied to an article to be coated having an electrodeposition coating film by using a metallic bell.

### (IV) Step of forming uncured colored coating film

The colored coating material (Y) was applied to the uncured glitter coating film using a metallic bell.

### (V) Step of forming uncured clear coating film

The clear coating material (Z) was applied to the uncured colored coating film using a micro micro bell.

### (VI) Curing step

After the step (V) of forming a clear coating film, the resultant was heated at 140°C for 20 minutes, affording an article to be coated having a multilayer coating film A1. In the multilayer coating film A1, the thicknesses of the glitter coating film, the colored coating film, and the clear coating film were 5 µm, 10 µm, 30 µm, respectively.

### [Comparative Example 1]

A coated article having a multilayer coating film B1 was obtained in the same manner as in Example 1 except that a glitter pigment dispersion (x1) prepared as follows was used.

### • Preparation of glitter pigment dispersion (x1)

A glitter pigment dispersion (x1) was obtained by adding deionized water to 0.95 parts of scaly Al particles C, 0.03 parts of vapor-deposited chromium oxide, 13.7 parts of aluminum-dissolved thinner, 0.99 parts of carbon black pigment, 1.04 parts of perylene pigment, 0.09 parts of iron oxide pigment, 3.50 parts of a hydroxy group-containing acrylic emulsion resin, 3.50 parts of a thermosetting resin, 0.24 parts of phosphoric acid, 0.33 parts of a surface conditioning agent, 0.37 parts of an amine, and 0.03 parts of a defoaming agent such that the solid content was 18%, and stirring the mixture.
Scaly Al particles C: trade name "WM-2068", manufactured by Asahi Kasei Corporation, thickness: 0.15 µm, average particle size: 16 µm

### [Comparative Example 2]

A coated article having a multilayer coating film B2 was obtained in the same manner as in Example 1 except that a glitter pigment dispersion (x2) prepared as follows was used.

### • Preparation of glitter pigment dispersion (x2)

A glitter pigment dispersion (x2) was obtained by adding deionized water to 0.95 parts of scaly Al particles D, 0.03 parts of vapor-deposited chromium oxide, 13.7 parts of aluminum-dissolved thinner, 0.99 parts of carbon black pigment, 1.04 parts of perylene pigment, 0.09 parts of iron oxide pigment, 3.50 parts of a hydroxy group-containing acrylic emulsion resin, 3.50 parts of a thermosetting resin, 0.24 parts of phosphoric acid, 0.33 parts of a surface conditioning agent, 0.37 parts of an amine, and 0.03 parts of a defoaming agent such that the solid content was 18%, and stirring the mixture.
Scaly Al particles D: trade name "TCR-3080", manufactured by Toyo Aluminium K.K., thickness: 0.33 µm, average particle size: 13 µm

### [Comparative Example 3]

A coated article having a multilayer coating film B3 was obtained in the same manner as in Example 1 except that the thickness of the glitter coating film was set to 2 µm.

### [Comparative Example 4]

A coated article having a multilayer coating film B4 was obtained in the same manner as in Example 1 except that the thickness of the glitter coating film was set to 10 µm.

### [Comparative Example 5]

A coated article having a multilayer coating film B5 was obtained in the same manner as in Example 1 except that the solid content of the glitter pigment dispersion was adjusted to 15.0%.

### [Comparative Example 6]

A coated article having a multilayer coating film B6 was obtained in the same manner as in Example 1 except that the solid content of the glitter pigment dispersion was adjusted to 25.0%.

### [Evaluation]

The obtained multilayer coating film or glitter coating film was evaluated as follows. The results of the evaluations are shown in Table 1.

### (1) Thickness of glitter coating film

The thickness of the glitter coating film after curing was measured using an electromagnetic film thickness meter (FISCHERSCOPE (registered trademark) MMS PC2, manufactured by Fischer Instruments K.K.). The average value of five different samples was taken as the thickness of the glitter coating film. The thicknesses of other coating films were also measured in the same manner.

### (2) Lightness L*₁₅, lightness L*₁₁₀

As a test plate, a coated article including a multilayer coating film formed was used.

By use of a variable angle color difference meter (Gonio-Spectrophotometer GSP-1, manufactured by MURAKAMI COLOR RESEARCH LABORATORY CO., LTD.) were acquired lightness L*₁₅ and lightness L*₁₁₀ in the L*C*h color system attained when light I₄₅ applied at an angle of 45 degrees with respect to the multilayer coating film from the clear coating film side is received at angles of 15 degrees and 110 degrees with respect to the regularly-reflected light. Average values of five different samples were taken as the lightness L*₁₅ and the lightness L*₁₁₀. In Example 1, the lightness L*₁₅ was 20.0, and the lightness L*₁₁₀ was 2.9.

### (3) Chroma C*₁₅, chroma C*₁₁₀

In the same manner as in (2), chroma C*₁₅ and chroma C*₁₁₀ in the L*C*h color system were acquired. Average values of five different samples are taken as the chroma C*₁₅ and the chroma C*₁₁₀. In Example 1, the chroma C*₁₅ was 44.1, and the chroma C*₁₁₀ was 4.6.

### (4) Lightness GL*₁₅, lightness GL*₁₁₀

A glitter pigment dispersion was applied to an article to be coated, and then heated at 140°C for 20 minutes, affording a test plate. The lightness GL*₁₅ and the lightness GL*₁₁₀ in the L*C*h color system of the glitter coating film were acquired in the same manner as in (2) except that light was applied at an angle of 45 degrees with respect to the surface of the obtained glitter coating film. Average values of five different samples were taken as the lightness GL*₁₅ and the lightness GL*₁₁₀. In Example 1, the lightness GL*₁₅ was 46.4, and the lightness GL*₁₁₀ was 2.3.

### (5) Chroma GC*₁₅, GC*₁₁₀

In the same manner as in (4), chroma GC*₁₅ and chroma GC*₁₁₀ in the L*C*h color system were acquired. Average values of five different samples are taken as the chroma GC*₁₅ and the chroma GC*₁₁₀. In Example 1, the chroma GC*₁₅ was 23.4, and the chroma GC*₁₁₀ was 1.0.

### (6) Graininess Si₁₅ value

Using a multi-angle colorimeter (BYK-mac i, manufactured by BYK-Gardner GmbH), an image of light applied from a direction inclined by 15 degrees with respect to the normal direction of the multilayer coating film was captured from the normal direction of the multilayer coating film, and analyzed, affording a graininess Si₁₅. The average value of five different samples was taken as the graininess Si₁₅.

### (7) Hiding property of glitter coating film

A hiding power test paper (manufactured by Nippon Testpanel Co., Ltd.) in accordance with JIS K 5600-4-1 (b) was used. The glitter pigment dispersion was spray-applied onto a 2 × 2 cm square monochrome checkered pattern of the hiding power test paper such that a gradient of dry film thickness was formed, and then was heated and cured. Next, a coating film portion where the monochrome checkered pattern could not be seen through was visually determined, and the film thickness of the portion was measured. The measured film thickness was taken as the monochrome hiding film thickness. From the obtained monochrome hiding film thickness, the hiding property of the glitter coating film was evaluated on the basis of the following evaluation criteria.

### (Evaluation criteria)

Good: The monochrome hiding film thickness is 6 µm or less.
Poor: The monochrome hiding film thickness is more than 6 µm.

### (8) Light transmittance

A glitter pigment dispersion was applied to a substrate for peeling, and then heated at 140°C for 20 minutes. Then, the formed coating film was peeled off from the substrate, affording a film. The film was irradiated with rays of light having a wavelength of 400 to 700 nm using a spectrophotometer (U-3310 manufactured by Hitachi, Ltd.), and the light transmittance was measured every 10 nm.

### (Evaluation criteria)

Good: The light transmittance is 0.25% or less at any wavelength.
Poor: The light transmittance is more than 0.25% at any wavelength.

**[Table 1]**

| | Configuration of glitter pigment dispersion | | | | | Multilayer coating film | | | Glitter coating film | | | |
|---|---|---|---|---|---|---|---|---|---|---|---|---|
| | Film thickness | Glitter pigment | Particle size of glitter pigment | Thickness of glitter pigment | Solid content | L*₁₅/L*₁₁₀ | C*₁₅/C*₁₁₀ | Si₁₅ | GL*₁₅/GL*₁₁₀ | GC*₁₅/GC*₁₁₀ | Hiding property | Light transmittance |
| Example 1 | 5 µm | Scaly Al particles A | 12 µm | 0.15 µm | 18.0% | 6.9 | 9.6 | 3.0 | 20.1 | 24.7 | Good | Good |
| | | Scaly Al particles B | 9 µm | 0.11 µm | | | | | | | | |
| | | Vapor deposited chromium oxide | 14 µm | 0.015 to 0.2 µm | | | | | | | | |
| Comparative Example 1 | 5 µm | Scaly Al particles C | 16 µm | 0.15 µm | 18.0% | 5.4 | 7.6 | 3.5 | 16.5 | 14.7 | Poor | Poor |
| | | Vapor deposited chromium oxide | 14 µm | 0.015 to 0.2 µm | | | | | | | | |
| Comparative Example 2 | 5 µm | Scaly Al particles D | 13 µm | 0.33 µm | 18.0% | 3.8 | 6.3 | 7.0 | 12.2 | 2.9 | Good | Good |
| | | Vapor deposited chromium oxide | 14 µm | 0.015 to 0.20 µm | | | | | | | | |
| Comparative Example 3 | 2 µm | Scaly Al particles A | 12 µm | *0.15* µm | 18.0% | 4.8 | 5.3 | 4.0 | 19.1 | 12.4 | Poor | Poor |
| | | Scaly Al particles B | 9 µm | 0.11 µm | | | | | | | | |
| | | Vapor deposited chromium oxide | 14 µm | 0.015 to 0.2 µm | | | | | | | | |
| Comparative Example 4 | 10 µm | Scaly Al particles A | 12 µm | 0.15 µm | 18.0% | 4.0 | 6.3 | 4.2 | 20.9 | 14.8 | Good | Good |
| | | Scaly Al particles B | 9 µm | 0.11 µm | | | | | | | | |
| | | Vapor deposited chromium oxide | 14 µm | 0.015 to 0.2 µm | | | | | | | | |
| Comparative Example 5 | 5 µm | Scaly Al particles A | 12 µm | 0.15 µm | 15.0% | 3.6 | 6.9 | 3.6 | 12.3 | 19.4 | Good | Good |
| | | Scaly Al particles B | 9 µm | 0.11 µm | | | | | | | | |
| | | Vapor deposited chromium oxide | 14 µm | 0.015 to 0.2 µm | | | | | | | | |
| Comparative Example 6 | 5 µm | Scaly Al particles A | 12 µm | 0.15 µm | 25.0% | 4.2 | 7.6 | 3.8 | 13.6 | 21.3 | Good | Good |
| | | Scaly Al particles B | 9 µm | 0.11 µm | | | | | | | | |
| | | Vapor deposited chromium oxide | 14 µm | 0.015 to 0.2 µm | | | | | | | | |

The present disclosure includes the following embodiments.
[1] A coated article comprising an article to be coated and a multilayer coating film, wherein
   the multilayer coating film includes:
      a glitter coating film that is formed on the article to be coated and includes a glitter pigment;
      a colored coating film that is formed on the glitter coating film and contains a coloring pigment; and
      a clear coating film that is formed on the colored coating film,
   a ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less, and
   a ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less.
[2] The coated article according to [1], wherein
   a ratio (GL*₁₅/GL*₁₁₀) of a lightness GL*₁₅ based on a spectral reflectance attained when light GI₄₅ applied at an angle of 45 degrees with respect to a surface of the glitter coating film is received at an angle of 15 degrees with respect to regularly-reflected light to a lightness GL*₁₁₀ based on a spectral reflectance attained when the light GI₄₅ is received at an angle of 110 degrees with respect to regularly-reflected light is 15 or more and 25 or less, and
   a ratio (GC*₁₅/GC*₁₁₀) of a chroma GC*₁₅ in the L*C*h color system based on a spectral reflectance attained when the light GI₄₅ is received at an angle of 15 degrees with respect to regularly-reflected light to a chroma GC*₁₁₀ in the L*C*h color system based on a spectral reflectance attained when the light GI₄₅ is received at an angle of 110 degrees with respect to regularly-reflected light is 15 or more and 35 or less.
[3] The coated article according to [1] or [2], wherein the glitter coating film has a thickness of 3 µm or more and 7 µm or less.
[4] The coated article according to any one of [1] to [3], wherein the glitter pigment includes scaly aluminum particles.
[5] The coated article according to [4], wherein the scaly aluminum particles have an average particle size of 8 µm or more and 13 µm or less and a thickness of 0.08 µm or more and 0.2 µm or less.
[6] The coated article of any one of [1] to [5], wherein the glitter pigment includes vapor-deposited chromium oxide.
[7] A method for producing a coated article, comprising:
   a step of applying a glitter pigment dispersion including a glitter pigment to an article to be coated to form an uncured glitter coating film;
   a step of applying a colored coating material including a coloring pigment to the uncured glitter coating film to form an uncured colored coating film;
   a step of applying a clear coating material to the uncured colored coating film to form an uncured clear coating film; and
   a step of curing the uncured glitter coating film, the uncured colored coating film, and the uncured clear coating film to obtain a multilayer coating film, wherein
   a ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less, and
   a ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less.
[8] The method for producing a coated article according to [7], wherein a solid content of the glitter pigment dispersion is 16% by mass or more and 20% by mass or less.
[9] The method for producing a coated article according to [7] or [8], wherein the clear coating material is a two-pack coating material including a hydroxy group-containing resin and a polyisocyanate compound.

### INDUSTRIAL APPLICABILITY

The coated article of the present invention is suitable particularly as an outside plate of an automobile body.

This application claims priority based on Japanese Patent Application No. 2022-192243, which was filed in Japan on November 30, 2022, the disclosure of which application is incorporated herein by reference in its entirety.

## Claims

1. A coated article comprising an article to be coated and a multilayer coating film, wherein
the multilayer coating film includes:
a glitter coating film that is formed on the article to be coated and includes a glitter pigment;
a colored coating film that is formed on the glitter coating film and includes a coloring pigment; and
a clear coating film that is formed on the colored coating film,
a ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less, and
a ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less.

2. The coated article according to claim 1, wherein
a ratio (GL*₁₅/GL*₁₁₀) of a lightness GL*₁₅ based on a spectral reflectance attained when light GI₄₅ applied at an angle of 45 degrees with respect to a surface of the glitter coating film is received at an angle of 15 degrees with respect to regularly-reflected light to a lightness GL*₁₁₀ based on a spectral reflectance attained when the light GI₄₅ is received at an angle of 110 degrees with respect to regularly-reflected light is 15 or more and 25 or less, and
a ratio (GC*₁₅/GC*₁₁₀) of a chroma GC*₁₅ in the L*C*h color system based on a spectral reflectance attained when the light GI₄₅ is received at an angle of 15 degrees with respect to regularly-reflected light to a chroma GC*₁₁₀ in the L*C*h color system based on a spectral reflectance attained when the light GI₄₅ is received at an angle of 110 degrees with respect to regularly-reflected light is 15 or more and 35 or less.

3. The coated article according to claim 1 or 2, wherein the glitter coating film has a thickness of 3 µm or more and 7 µm or less.

4. The coated article according to any one of claims 1 to 3, wherein the glitter pigment includes scaly aluminum particles.

5. The coated article according to claim 4, wherein the scaly aluminum particles have an average particle size of 8 µm or more and 13 µm or less and a thickness of 0.08 µm or more and 0.2 µm or less.

6. The coated article of any one of claims 1 to 5, wherein the glitter pigment includes vapor-deposited chromium oxide.

7. A method for producing a coated article, comprising:
a step of applying a glitter pigment dispersion including a glitter pigment to an article to be coated to form an uncured glitter coating film;
a step of applying a colored coating material including a coloring pigment to the uncured glitter coating film to form an uncured colored coating film;
a step of applying a clear coating material to the uncured colored coating film to form an uncured clear coating film; and
a step of curing the uncured glitter coating film, the uncured colored coating film, and the uncured clear coating film to obtain a multilayer coating film, wherein
a ratio (L*₁₅/L*₁₁₀) of a lightness L*₁₅ based on a spectral reflectance attained when light I₄₅ applied at an angle of 45 degrees with respect to a surface of the multilayer coating film is received at an angle of 15 degrees with respect to regularly-reflected light to a lightness L*₁₁₀ based on a spectral reflectance attained when the light I₄₅ is received at an angle of 110 degrees with respect to regularly-reflected light is 5 or more and 9 or less, and
a ratio (C*₁₅/C*₁₁₀) of a chroma C*₁₅ in the L*C*h color system based on a spectral reflectance attained when the light I₄₅ is received at an angle of 15 degrees with respect to regularly-reflected light to a chroma C*₁₁₀ in the L*C*h color system based on a spectral reflectance attained when the light I₄₅ is received at an angle of 110 degrees with respect to regularly-reflected light is 8 or more and 12 or less.

8. The method for producing a coated article according to claim 7, wherein a solid content of the glitter pigment dispersion is 16% by mass or more and 20% by mass or less.

9. The method for producing a coated article according to claim 7 or 8, wherein the clear coating material is a two-pack coating material including a hydroxy group-containing resin and a polyisocyanate compound.
